# EUROPEAN PATENT SPECIFICATION

(11) **EP 3 306 641 B1**
(45) Date of publication and mention of the grant of the patent: **25.12.2024**
(21) Application number: 16799656.0
(22) Date of filing: 24.03.2016
(51) Int. Cl.: H01J 65/00, H01J 61/35, H01J 65/04, H01J 61/30, H01J 61/33, H01J 61/44, H01J 61/56, H01J 61/067, H01J 61/92, H05B 33/14, C09K 11/77

(54) **GAS DISCHARGE LIGHT-EMITTING DEVICE AND DRIVE CIRCUIT THEREFOR**
LICHTEMITTIERENDE GASENTLADUNGSVORRICHTUNG UND ANSTEUERUNGSSCHALTUNG DAFÜR
DISPOSITIF ÉLECTROLUMINESCENT À DÉCHARGE DE GAZ ET SON CIRCUIT D'ATTAQUE

(30) Priority: 28.05.2015 JP 2015108661
(43) Date of publication of application: 11.04.2018
(73) Proprietor: Shikoh Tech Co., Ltd., Awaji-shi, Hyogo 656-2304 (JP)
(72) Inventor: SHINODA, Tsutae, Akashi-shi Hyogo 674-0057 (JP); HIRAKAWA, Hitoshi, Takasago-shi Hyogo 676-0807 (JP); AWAMOTO, Kenji, Miki-shi Hyogo 673-0533 (JP); GUO, Bingang, Kobe-shi, Hyogo 650-0044 (JP); HIDAKA, Takefumi, Kobe-shi Hyogo 653-0851 (JP); TAKAHASHI, Junichiro, Nishinomiya-shi Hyogo 662-0862 (JP)
(74) Representative: Piotrowicz, Pawel Jan Andrzej
(86) International application number: PCT/JP2016/059428
(87) International publication number: WO 2016/189948

(56) References cited:
- EP-A1- 0 604 902
- EP-A2- 0 518 132
- EP-A2- 1 349 191
- WO-A1-2007/108119
- JP-A- 2001 196 028
- JP-A- 2002 216 704
- JP-A- 2007 103 056
- JP-A- 2010 219 073
- JP-A- H0 684 506
- US-A1- 2005 030 277
- US-A1- 2006 043 869
- US-A1- 2009 108 725
- US-A1- 2009 179 546

## Description

### TECHNICAL FIELD

The present invention relates to a gas discharge ultraviolet light-emitting device and a drive circuit therefor, and more particularly to an ultraviolet light-emitting device which has an external electrode structure including a thin glass tube as a main component and which uses a gas discharge, and a drive circuit therefor.

### BACKGROUND ART

There have conventionally been known a high-pressure mercury lamp and an excimer discharge lamp as an ultraviolet light-emitting device using a gas discharge. Also, a gas discharge light-emitting device using an ultraviolet light-emitting phosphor is disclosed in Patent Document 1, and a gas discharge light-emitting device having a thin tube configuration suitable for a configuration of a flat light source has been proposed in, for example, Patent Documents 2 and 3.

### PRIOR ART

### PATENT DOCUMENT

Patent Document 1: Japanese Patent No. 5074381
Patent Document 2: Japanese Unexamined Patent Publication No. 2004-170074
Patent Document 3: Japanese Unexamined Patent Publication No. 2011-040271
Patent Document 4: US 2009/108725 A1 (HIRAKAWA HITOSHI [JP] ET AL) 30 April 2009 (2009-04-30)
Patent Document 5: EP 0 518 132 A2 (MITSUBISHI ELECTRIC CORP [JP]) 16 December 1992 (1992-12-16)
Patent Document 6: US 2006/043869 A1 (YOON JAE D [KR]) 2 March 2006 (2006-03-02)
Patent Document 7: US 2005/030277 A1 (YOO HYEONG-SUK [KR] ET AL) 10 February 2005 (2005-02-10)
Patent Document 8: JP 2001 196028 A (HARISON TOSHIBA LIGHTING CORP) 19 July 2001 (2001-07-19)

### SUMMARY OF THE INVENTION

### PROBLEM TO BE SOLVED BY THE INVENTION

Patent Document 1 discloses an excimer discharge lamp configuration using an ultraviolet phosphor of UV-C band. However, this configuration has problems of requiring an expensive quartz glass envelope and requiring a high-voltage rectangular-wave alternating-current power supply for drive. Further, gas discharge devices for ultraviolet light emission using a gas discharge tube disclosed in Patent Documents 2 and 3 have a complicated electrode structure, and have not yet been developed to a practical level from a viewpoint of luminous efficiency and emission intensity. Patent document 4 merely discloses a display apparatus in which a front plate having display electrode pairs is disposed on the front side of a gas discharge tube array, and an insulating layer covering the display electrode pairs is disposed between outer wall surfaces of the front side of the tube array. Patent document 5 simply discloses a discharge lamp in which a pair of discharge electrodes are mounted on an external peripheral surface of a gas discharge tube along a longitudinal direction of the tube. Patent document 6 only discloses a discharge lamp in which a plurality of discharge channels are formed between an upper plate and a lower plate, and discharge electrode pairs disposed along the channels are disposed on the back side of the lower plate. Patent document 7 merely discloses a drive circuit for an external electrode-type gas discharge lamp including an inverter circuit and a booster transformer. Patent document 8 simply discloses a gas discharge lamp in which metallic foil electrodes formed on a resin film are pasted to a peripheral face of a glass tube with an adhesive.

In addition, to solve the foregoing problems, the present inventors have invented a novel gas discharge light-emitting device comprising a pair of long electrodes which is provided outside of a thin glass tube filled with a discharge gas and extends in a direction away each other from a gap interposed between adjacent ends of the electrodes (see, PCT/JP2016/052716). In this gas discharge light-emitting device, high efficient light emission throughout the entire length of an electrode arrangement region can be obtained by driving through application of a sine wave voltage between the pair of long electrodes . This plasma tube type gas discharge light-emitting device operates such that a trigger discharge is initially generated between adjacent ends of the electrodes during an increasing process of a sine wave voltage applied between both electrodes, and this trigger discharge is gradually grown so as to expand in longitudinal direction of the electrodes until the applied voltage reaches a peak value.

However, the present inventors have experienced, in an operating test for a gas discharge device provided with a pair of long electrodes according to the previous invention, a phenomenon in which an unnecessary spark discharge occurs along the side edges of the long electrodes outside the tube.

Specifically, when the device is driven by applying a sine wave voltage to one of a pair of long electrodes with the other being grounded, it is considered that, at the stage at which the applied voltage reaches a peak value, the inside of the tube is substantially in a conductive state due to a plasma throughout the entire length to have a potential corresponding to the peak voltage, and an unexpected spark discharge occurs in a gap between the curved surface of the tube and the side edge of the electrode having a ground potential, which face each other. In addition, even when air bubbles are present on a contact surface between the outer wall surface of the tube and the long electrodes due to fine irregularities on the outer wall surface of the tube, there is a risk of a spark discharge being caused at the portion where air bubbles are present. The spark discharge outside the tube causes generation of unpleasant ozone and damage on the electrode or the tube, and thus, not preferable from the viewpoint of safety.

The present invention is accomplished in view of the above circumstances, and aims to provide: a gas discharge light-emitting device for a light source, particularly for an ultraviolet light source, that has a simple configuration, is inexpensive, and has excellent emission efficiency, and that can prevent particularly a spark discharge on a wall surface outside a tube; and a drive circuit therefor. The present invention also aims to provide a gas discharge light-emitting device for a flat light source, particularly for an ultraviolet flat light source, which can be easily formed into a module to which a drive circuit is integrated and can provide light emission with high efficiency and high intensity with a compact size.

### MEANS FOR SOLVING THE PROBLEMS

In the present invention, new practically improving is added in the gas discharge light-emitting device based on the previous invention. Briefly, the present invention is characterized by a configuration in which a discharge electrode is provided on the outer wall surface of a glass tube through an insulating layer. Specifically, the present invention is based on an idea in which an electric field from a plasma, in the tube, which causes a spark discharge is weakened by the insulating layer desposed between the discharge electrode and the outer wall surface of the tube to prevent the spark discharge along the outer wall surface of the tube.

A gas discharge UV light-emitting device according to the present invention is defined by claim 1. A UV light source unit according to the present invention is defined by claim 8. A gas discharge UV light-emitting module according to the present invention is defined by claim 9. Preferred embodiments are set out in dependent claims 2-7 and 10.

### EFFECT OF THE INVENTION

The main constituent features of the gas discharge light-emitting device according to the present invention are the glass tube, the phosphor layer provided inside the glass tube, and the discharge gas filled in the glass tube, so that the gas discharge light-emitting device does not contain toxic mercury. A pair of long discharge electrodes provided on the outer surface of the glass tube so as to extend along the longitudinal direction to be away from each other with a discharge gap being formed therebetween is simple, and according to the pair of long discharge electrodes, uniform light emission with high-efficient and high-intensity can be achieved throughout the entire length of the glass tube. In addition, the insulating layer being interposed between the discharge electrodes and the outer surface of the glass tube provides an effect of preventing a spark discharge along the side edge of the electrodes.

In addition, in the flat light source unit constructed by arraying multiple gas discharge light-emitting tubes parallel to one another, a drive circuit unit including, as a main component, a printed substrate serving also as a support substrate is integrally mounted below the common electrodes, which allows the light source to be constructed into a module. In this flat light source module, high-efficient and high-intensity surface light emission can be achieved, and further, this module can be handled with safety because no spark discharge occurs.

Accordingly, the flat light source module for ultraviolet light emission constructed by using an array of multiple gas discharge light-emitting tubes particularly provided with an ultraviolet light-emitting phosphor layer can be constructed not only to include no mercury but also to be capable of performing uniform and high-intensity ultraviolet radiation from a wide light-emitting surface without causing shadows, thereby providing an effect of expanding practical application for medical use or industrial use.

### BRIEF DESCRIPTION OF THE DRAWINGS

FIG. 1 shows a schematic longitudinal sectional view and a transverse sectional view showing a principled configuration of a gas discharge light-emitting device according to a first embodiment of the present invention.
FIG. 2 shows a schematic plan view and a transverse sectional view showing a basic configuration of a gas discharge light-emitting device according to a second embodiment of the present invention.
FIG. 3 is a sectional view schematically showing a configuration of a gas discharge light-emitting device according to a third embodiment of the present invention.
FIG. 4 is a circuit diagram showing an example of a drive circuit according to the present invention.

### EMBODIMENTS OF THE INVENTION

Preferable embodiments of the present invention will be described below in detail with reference to the drawings. It is to be noted that, for simplifying the description, the same components are identified by the same reference numerals.

### [First Embodiment]

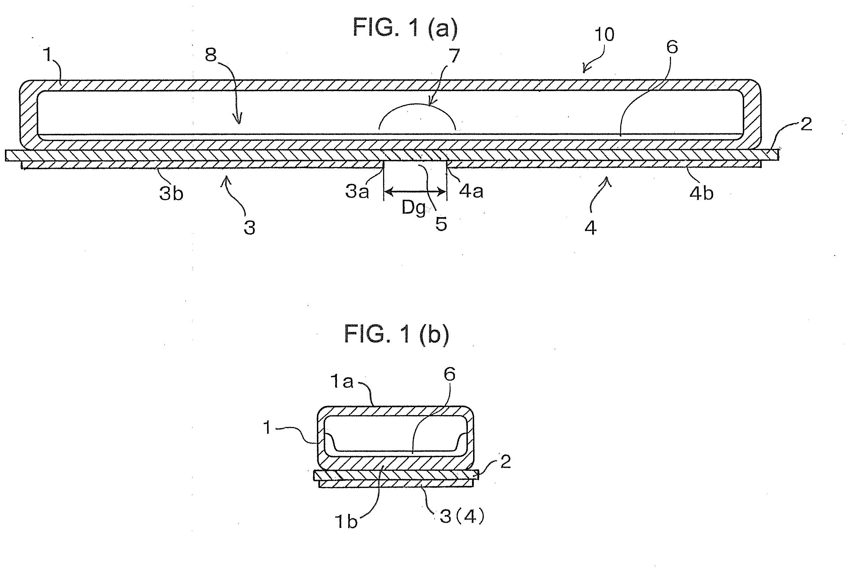

FIGS. 1(a) and 1(b) are each a schematic longitudinal sectional view and a transverse sectional view showing the basic configuration of a gas discharge light-emitting device according to the present invention as a first embodiment. An elongate glass tube 1 filled with a gaseous mixture of neon (Ne) and xenon (Xe) as a discharge gas constitutes an envelope that is a main component of the device. As shown in FIG. 1(b), the glass tube 1 has a transverse section with a flat-oval shape, and has a front side upper part 1a and a back side bottom part 1b which are flat and face each other across a major axis. A pair of discharge electrodes 3 and 4 extending along the longitudinal direction of the glass tube 1 is arranged to extend to either side with an electrode gap 5 being interposed between adjacent ends thereof on the outer surface of the glass tube 1 on the back side bottom part through an insulating layer 2. The discharge electrodes 3 and 4 are elongate along the glass tube 1, so that they are referred to as long electrodes.

In a gas discharge light-emitting tube as a unit light source, that is, in a plasma tube 10, the glass tube 1 which is a main component is formed such that a pipe-like preform of a borosilicate glass including silicon oxide (SiO₂) and boron oxide (B₂O₃) as main components is redrawn to be formed into a thin tube with an outer diameter of 0.5-5 mm and a thickness of 500 µm or less. The glass tube 1 has a transverse section with a flat-oval shape with a major axis of 2 mm and a minor axis of 1 mm as shown in FIG. 1(b). However, the glass tube 1 may have a transverse section with any shape such as a circle, rectangle, oblong, or trapezoid.

The insulating layer 2 which is the feature of the present invention is formed from an insulating tape or an insulating film affixed on the flat surface of the back side bottom part 1b of the glass tube 1 with a width larger than the major axis of the glass tube. The insulating layer 2 preferably has a thickness of 50-200 µm. If the insulating layer 2 is too thin, a function of preventing an external discharge is insufficient, and if it is too thick, it is difficult to obtain sufficient discharge expansion in the tube in relation to a discharge voltage. In addition, a heat-resistant tape or film made of a polyimide resin can be used for the insulating layer 2. For example, Kapton tape (trade name) can preferably be used. A pair of long electrodes 3 and 4 is arranged on the lower surface of the insulating layer 2 as described later.

An ultraviolet light-emitting phosphor layer 6 is formed on the inner surface of the glass tube 1 on the back side bottom part 1b. This ultraviolet light-emitting phosphor layer 6 is excited by vacuum ultraviolet light (emission wavelength: 143 nm, 173 nm) generated by a gas discharge using a gaseous mixture of neon and xenon, thereby generating ultraviolet light or visible light having spectrum according to the characteristics of the phosphor.

If a gadolinium-activated phosphor (LaMgAl₁₁O₁₉:Gd) is used for the ultraviolet light-emitting phosphor layer 6, ultraviolet emission of UV-B band having a peak wavelength with a narrow bandwidth at 311 nm can be obtained.

If a praseodymium-activated phosphor (YBO₃:Pr or Y₂SiO₅:Pr) is used, ultraviolet emission of UV-C band having a peak wavelength at 263 nm can be obtained.

When the gas discharge light-emitting tube (plasma tube 10) for an ultraviolet light source is constructed by forming the ultraviolet light-emitting phosphor layer 6, it is important to set the thickness of the front side upper part 1a, serving as a light-emitting surface, of the glass tube 1 to be 300 µm or less from the viewpoint of the ultraviolet transmittance. The present inventors have proved through experiments that, even if borosilicate glass such as Pyrex (registered trademark) is used, transmittance of 90% or more with respect to ultraviolet light having the UV-B wavelength band can be obtained by adjusting the thickness to be 300 µm or less. When the thickness of the light-emitting surface is set to be 100 µm or less, transmittance of 80% or more even with respect to ultraviolet light having the UV-C wavelength band can be obtained.

In this case, the thickness at the back side bottom part 1b of the glass tube 1 where the insulating layer 2, the long electrodes 3 and 4, and the ultraviolet light-emitting phosphor layer 6 are disposed may be set larger than the thickness at the front side upper part 1a to enhance mechanical strength. The glass tube 1 in which the thicknesses of the surfaces facing each other are asymmetric can be implemented by a process control for shaping the glass preform.

In the configuration shown in FIG. 1(a), adjacent proximal ends of a pair of long electrodes 3 and 4 arranged on the insulating layer 2 constitute trigger electrode portions 3a and 4a with the electrode gap 5 interposed therebetween, and a gas space corresponding to the electrode gap 5 becomes a trigger discharge portion 7.

Further, extension portions extending to either side from the trigger electrode portions 3a and 4a in the direction away from each other constitute main electrode portions 3b and 4b, and a gas space corresponding to the main electrode portions 3b and 4b becomes a main gas discharge portion 8. A pair of long electrodes 3 and 4 having the trigger electrode portions 3a and 4a and the main electrode portions 3b and 4b are respectively referred to as the X electrode 3 and the Y electrode 4 below.

An electrode gap length Dg of the electrode gap 5 is set within the range of 0.1-20 mm, as appropriate. In addition, the X electrode 3 and the Y electrode 4 are set to have a length more than three times to about ten times or more than the electrode gap length Dg. The arrangement of a pair of long electrodes enables uniform light emission throughout the entire length of the light-emitting tube.

When the electrode gap length Dg is set to be 3 mm, and the X electrode 3 and the Y electrode 4 each have a length of 23.5 mm, the gas discharge light-emitting tube 10 having an effective light-emitting region with a length of 50 mm is obtained based on the total size. It is to be noted that the length of the X and Y electrodes 3 and 4 that make a pair needs to be determined in consideration of the relationship between the peak value of an alternating drive voltage necessary for expanding the discharge throughout the entire length of the effective light-emitting region and the breakdown voltage of the electrode gap 5.

The X electrode 3 and the Y electrode 4 may be directly formed on the lower surface of the insulating film 2, which is affixed on the outer surface 1b of the bottom part of the plasma tube 10, by printing conductive ink such as a silver paste or the like in advance, or may be formed by pasting or bonding a metal conductive foil such as a copper foil or an aluminum foil onto the lower surface of the insulating film 2. Alternatively, an electrode substrate on which a metal conductive film having an electrode pattern is formed by printing or vapor deposition is prepared, and this electrode substrate can be pasted on the surface of the back side bottom part 1b of the plasma tube 10 through a base film serving as the insulating layer.

If the insulating layer 2 formed as a base of the X electrode 3 and the Y electrode 4 is made of a transparent fluoroplastic such as Teflon (registered trademark), the X and Y electrodes are preferably formed from a material having high light reflection characteristic, and for this point, it is effective to use an aluminum foil in particular. In this case, the electrode gap 5 may be a window open downward relative to the non-transmissive part of the X and Y electrodes 3 and 4, so that emitted light exits to the back side, which may cause unevenness in an emission intensity distribution on the light-emitting surface. Therefore, when the insulating layer 2 is formed from a material having light transparency, it is preferable that at least the electrode gap 5 is closed by an insulating material having light reflection characteristic equal to the light reflection characteristic of the electrode material, such as a reflection tape.

In addition, if the surface of the plasma tube 10 is directly coated by a fluoroplastic having a function of satisfactorily transmitting ultraviolet light, such as Teflon (registered trademark), for example, this transparent coating layer can be functioned as the electrode insulating layer 2. Specifically, resistance to weather and mechanical strength of the glass tube are enhanced by Teflon coating, and further, irregularities on the surface of the glass tube 1 are absorbed by Teflon coating, whereby air bubbles being present on the contact surface between the glass tube 1 and the electrodes can be eliminated to prevent a spark discharge. In addition, if the transparent insulating layer is used, a pair of translucent electrodes may be arranged on the front side of the glass tube.

### [Description of driving principle]

The gas discharge light-emitting tube of a novel type according to the present invention, that is, the plasma tube 10, has an external electrode type, and is driven by a sine wave voltage. When a sine wave voltage is applied to the Y electrode 4 of the pair of X and Y electrodes 3 and 4 with the X electrode 3 being grounded, a trigger discharge is generated at a point at which the voltage between the trigger electrode portions 3a and 4a exceeds a discharge start voltage of the trigger discharge portion 7 during an increasing process of the voltage.

Due to the priming effect caused by a supply of space charges from the trigger discharge portion 7, a discharge start voltage is decreased, so that a new discharge is expanded toward either end of the main electrode portions 3b and 4b with the increase in the applied sine wave voltage.

On the other hand, as the feature of the external electrode type discharge device, charges (electrons and plus ions) having a polarity opposite to the polarity of the applied voltage are accumulated as wall charges on an inner wall surface of the glass tube corresponding to the discharged electrode, and the electric field caused by this wall charges cancel the electric field caused by the external voltage applied to the corresponding portions. Thus, the temporarily generated discharge is sequentially stopped. This operation principle is described in detail in the specification of PCT/JP2016/052716 previously cited.

When the polarity of the applied sine wave driving voltage is inverted, the internal electric field caused by wall charges is combined with the electric field caused by the externally applied voltage, resulting in that the discharge is again generated at the trigger discharge portion 7. Thereafter, the expansion and stop of the discharge with the increase in the applied sine wave voltage spread toward either end of the main electrode portions 3b and 4b as in the same manner as described above.

Due to the operation described above being repeated, the gas discharge and the light emission associated therewith are achieved. Notably, the sine wave drive voltage is set such that the discharge is expanded to either end of the X electrode 3 and the Y electrode 4 at its peak value. Alternatively, the length of the X electrode 3 and the Y electrode 4 is determined such that the peak value of the sine wave drive voltage does not exceed the breakdown voltage of the electrode gap 5. Note that the driving frequency is a factor for determining an emission intensity, and is appropriately set to several 10 kHz, for example, 40 kHz.

While the discharge light-emitting operation described above is performed, the risk of a spark discharge generated in the gap between the electrodes and the both side edges of the curved surface portion on the bottom part of the plasma tube 10 can be avoided by the wide insulating film 2. Specifically, the electrodes are not directly exposed on portions facing the curved surface portions at both side edges on the bottom part of the tube, whereby the electric field in the gap at said both side edges is not increased enough to cause the spark discharge.

### [Second Embodiment]

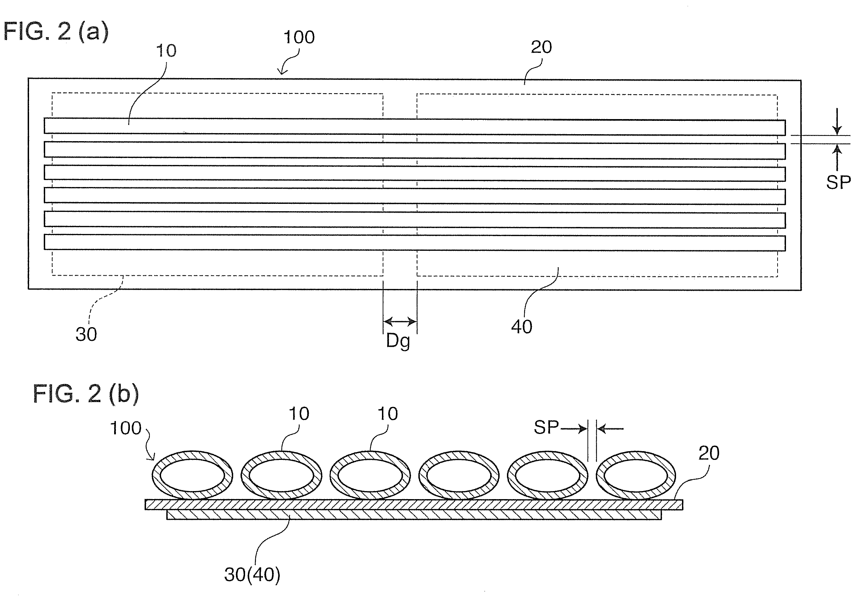

FIGS. 2(a) and 2(b) each show a schematic plan view and a transverse sectional view of a gas discharge light-emitting device according to a second embodiment of the present invention. The gas discharge light-emitting device according to the second embodiment is characterized by a configuration of a flat surface light source unit 100 of a light emitting tube array type in which a plurality of gas discharge light-emitting tubes (plasma tubes) 10 is arrayed parallel to one another.

As shown in FIG. 2(a), multiple gas discharge light-emitting tubes 10, in the present embodiment, six gas discharge light-emitting tubes 10, for example, are arrayed on an insulating film 20 with a space SP therebetween which is about a tenth (1/10) the width of the tube. Preferably, an adhesive agent having excellent thermal conductivity, such as silicon grease, is used to fix the tubes 10 on the insulating film 20. Due to the space SP between the adjacent tubes being filled with the adhesive agent, a spark discharge along the outer walls of the tubes can reliably be prevented. If a large number of gas discharge light-emitting tubes 10 are arrayed, several tubes may be collected as a unit block, and a space SP may be formed between the adjacent unit blocks. Due to the space SP being formed, the flat light source unit 100 has flexibility in the arraying direction of the gas discharge light-emitting tubes 10.

In addition, as shown in FIG. 2(b), the flat surface light source unit 100 has a configuration of a tube array in which six gas discharge light-emitting tubes 10 are supported parallel to one another on the common insulating film 20. An X electrode 30 and an Y electrode 40 formed from a metal conductive film or foil are disposed on the lower surface of the insulating film 20 so as to be common to the respective gas discharge light-emitting tubes 10 with a gap having a length Dg therebetween across the respective tubes at almost the center thereof. In this configuration, while the X electrode 30 and the Y electrode 40 each have a pattern for covering almost the entire region of the tube array at the back side except for the gap Dg as shown in FIG. 2(a), they extend to either end of each of the light-emitting tubes 10 with a length more than three times the gap Dg, as in the configuration in FIG. 1. The insulating film 20 is formed from the Kapton tape (trade name) mentioned above, and the electrodes 30 and 40 are formed from an aluminum foil. The X electrode 30 and the Y electrode 40 formed from an aluminum foil are pasted on the back surface of the Kapton tape with a bonding agent or an adhesive agent. It should be noted that the X electrode 30 and the Y electrode 40 made of an aluminum foil are preferably formed to have a dimensional pattern such that ends thereof are slightly inward from both ends of the gas discharge light-emitting tubes 10 to avoid a risk of contact therebetween. The insulating film 20 having a function as a support member for the gas discharge light-emitting tubes 10 has a thickness of about 50 to 100 µm, and the aluminum foil constituting the X electrode 30 and the Y electrode 40 has a thickness of about 10 µm.

FIG. 2 shows a principled configuration of the flat light source unit 100 according to the present invention, and it is not preferable to use the unit 100 with the X electrode 30 and the Y electrode 40 being directly exposed on the lower surface of the unit 100. As an actual flat light source, the surface where the X electrode and the Y electrode are disposed is covered by another insulating film which is not shown. In addition, from a practical point of view, in place of disposing the X electrode and the Y electrode on the lower surface of the insulating film 20, a printed electrode substrate having formed thereon a conductive film with an electrode pattern with printing or vapor deposition is formed on another insulating substrate not shown, and the gas discharge tubes 10 supported on the insulating film 20 are overlaid on this insulating substrate.

### [Third Embodiment]

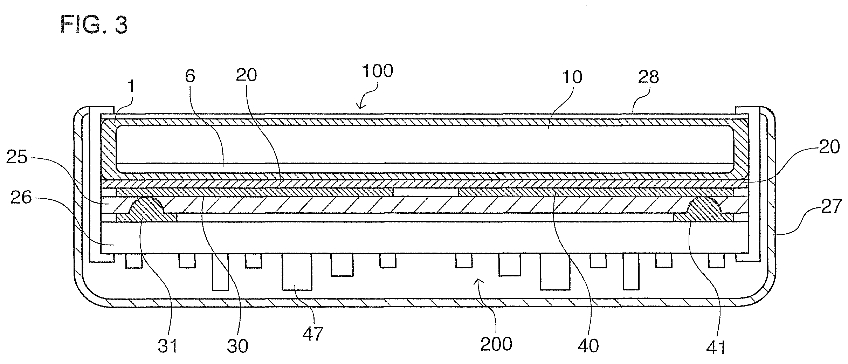

FIG. 3 is a schematic sectional view of a gas discharge light-emitting device having a drive-circuit-integrated light source module configuration according to a third embodiment. As the module configuration, the flat light source unit 100 described in the second embodiment is overlaid on a printed substrate 26 constituting a drive circuit unit 200 through an impact absorbing layer 25, and they are integrally stored in an external frame or a case 27. Further, a translucent protection plate 28 is provided on the front surface of the flat light source unit 100.

A soft insulating material having high thermal conductivity and impact absorption property, such as a silicon compound or a silicon sheet, is preferable for the impact absorbing layer 25. An acrylic or fluoroplastic film or thin plate having excellent ultraviolet light transmittance is used for the protection plate 28. The printed substrate 26 has mounted thereon components of the drive circuit unit 200 described later.

A pair of power feed terminals 31 and 41 which is brought into contact with the X electrode 30 and the Y electrode 40 on the back surface of the flat light source unit 100 is provided on the left and right sides on the top surface of the printed substrate 26. The contact between the X electrode 30 and the power feed terminal 31 and between the Y electrode 40 and the power feed terminal 41 does not require DC connection in a strict sense, and an alternate drive voltage can be supplied to the flat light source unit 100 from the drive circuit unit 200 only by bringing the electrode and the corresponding terminal into a touch state where they only overlap each other directly or through a clip-shaped contact piece. Therefore, the light source unit 100 and the drive unit 200 can easily be separated from each other.

The drive circuit unit 200 generates a sine wave drive voltage to drive the flat light source unit 100. The sine wave drive voltage is supplied to the Y electrode 40 from the power feed terminal 41 with the power feed terminal 31 defined as a ground being connected to the X electrode 30, whereby the discharge light emission with the operation principle described previously can be obtained.

Note that the flat light source unit 100 with an emission area of 90 cm² can be obtained by arranging, with an interval of 1 mm, thirty(30) gas discharge light-emitting tubes 10 having a flat-oval cross-sectional shape with a major axis of 2 mm and a minor axis of 1 mm and having an effective emission area with a length of 10 cm.

In addition, the diameter of the gas discharge light-emitting tube 10 is a maximum of 5 mm, and the total thickness of the light source module including the impact absorbing layer 25, the printed substrate 26, and the protection plate 28 on the front surface as well as the gas discharge light-emitting tube 10 is 1 cm or less. On the other hand, to drive this light source unit 100, an alternating-voltage drive circuit having a peak voltage of several 1000 V and a frequency of several 10 kHz is needed. However, if the light source unit has only about thirty light-emitting tubes, it can beneficially be driven by a later-described popular compact power source with about several Watts.

Herein, when a drive circuit includes an inverter circuit that converts a DC voltage of 9 V (battery voltage) into a sine wave voltage of 42 kHz and a compact transformer that boosts the peak value of the sine wave voltage to 1000 V, the drive circuit unit including the battery may have a size within a capacity of about 50 cm³.

Therefore, even when the previously mentioned light source unit 100 having a light-emitting surface of about 90 cm² is used in the light-emitting device shown in FIG. 3, and this light source unit 100 and the drive circuit unit 200 having the printed substrate 26 as a main component overlap each other and are integrated, the storage case 27 only requires a compact size of 9 x 10 cm with a thickness of about 1 cm.

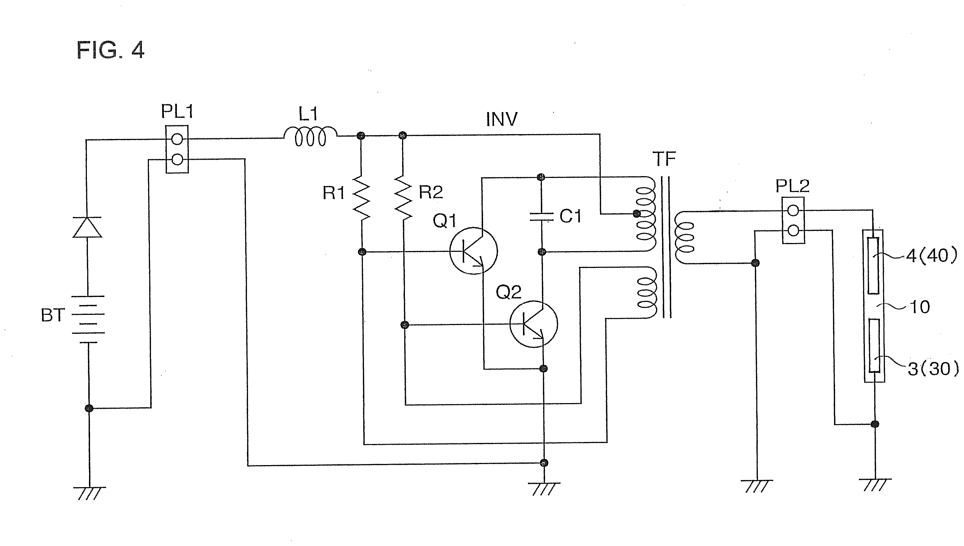

FIG. 4 is a circuit diagram showing one example of a circuit structure of the drive circuit unit 200. A battery BT to which a voltage can be set within a range of DC 6-18 V is connected to an inverter circuit section INV through an input plug PL1.

The inverter circuit section INV is composed of transistors Q1 and Q2, a coil L1, resistors R1 and R2, and a capacitor C1. An alternating output from the inverter circuit section INV is extracted from an output plug PL2 from a secondary winding of a step-up transformer TF. A sine wave alternating high voltage is obtained at the output plug PL2 by appropriately setting the circuit constant of each circuit component, and the obtained voltage is applied between the X electrode 30 and the Y electrode 40 of the gas discharge light-emitting tubes 10. Note that the drive circuit unit 200 can cause the gas discharge light-emitting tube 10 to emit light through application of the similar voltage to the X electrode 3 and the Y electrode 4 in the first embodiment.

The frequency of the sine wave voltage can be adjusted within a range of 10 kHz to 80 kHz by varying the capacitance of the capacitor C1, and the peak value of the sine wave output voltage can be adjusted within the range of 1000 V to 8000 V by varying the voltage of the battery BT.

What is noted in the drive circuit shown in FIG. 4 is that there is no current limiting capacitor which is generally provided on an output line of the step-up transformer TF. One of the output lines of the step-up transformer is connected to a ground potential and the grounded X electrode 3 or 30 of the gas discharge tube 10, and the other output line is directly connected to the Y electrode 4 or 40. The gas discharge tube 10 according to the present invention becomes a complete capacitive load relative to the drive circuit unit 200, whereby unnecessary power loss can be eliminated by eliminating an output capacitor.

The printed substrate 26 has mounted thereon circuit components 47, such as a coil, a capacitor, and a transformer, that constitute the drive circuit. The printed substrate 26 is disposed on the lower part of the light source unit 100 with the mounted components facing downward. In addition, the battery BT serving as a power supply may be stored in a battery storage unit formed in the case 27, or may be connected to an external power supply by a power supply connection line led from the printed substrate 26.

### [Other Modifications]

While the gas discharge light-emitting device for ultraviolet light emission has been mainly described above, a visible light source using a phosphor which is excited by vacuum ultraviolet light due to gas discharge to emit light in a visible region can also be implemented. In addition, the gas discharge light-emitting device according to the present invention is also usable as a light source which uses light emission, in an ultraviolet region or a visible region, by a gas discharge itself without using a phosphor.

The gas discharge light-emitting tube serving as a light emission unit is thin with a diameter of several millimeters. Therefore, in the configuration of the flat light source unit 100 shown in FIG. 2, a common flexible support substrate (not shown) is additionally provided, and the light source unit 100 is disposed on this substrate through an adhesive layer or a buffer layer, by which the exposure of the X electrode and the Y electrode can be prevented, and the support strength can be increased. Thus, the number of the light-emitting tubes 10 to be arrayed can be increased, and the length of the light-emitting tubes can be increased, which lead to an increase in a light-emitting surface as appropriate. The large-scale flat light source unit has a film shape with flexibility, thereby providing a benefit of easily obtaining a curved light-emitting surface for medical use or sterilization use.

In addition, while only the configuration provided with a pair of discharge electrodes has been described in the above embodiments, along the longitudinal direction of the glass tube, multiple pairs of the X electrode 3 and the Y electrode 4 can be arranged, the X electrode and the Y electrode are arranged in an alternating manner.

When multiple long light-emitting tubes described above are arrayed to construct a flat light source unit, multiple electrode pairs for each light-emitting tube are provided on a common insulating layer as segment electrode pairs common to all of the light-emitting tubes in the direction crossing the light-emitting tubes.

### EXPLANATION OF NUMERALS

- 1: glass tube
- 1a: front upper part
- 1b: back bottom part
- 2: insulating layer
- 3, 30: X electrode
- 3a, 4a: trigger electrode portion
- 3b, 4b: main electrode portion
- 4, 40: Y electrode
- 5: electrode gap
- 6: ultraviolet light-emitting phosphor layer
- 7: trigger discharge portion
- 8: main gas discharge portion
- 10: gas discharge light-emitting tube (plasma tube)
- 20: insulating film
- 25: impact absorbing layer
- 26: printed substrate
- 27: case
- 28: protection plate
- 31, 41: power feed terminal
- 47: circuit component
- 100: flat light source unit
- 200: drive circuit unit

## Claims

1. A gas discharge UV light-emitting device comprising:
a glass tube (1) having an upper part (1a) and a bottom part (1b) facing each other on a transverse section thereof, and filled with a discharge gas, the upper part (1a) being defined as a light-emitting surface;
at least a pair of electrodes (3, 4) disposed at a position facing an outer wall surface of the bottom part (1b) of the glass tube (1),
wherein the pair of electrodes (3, 4) has a gap (5) constituting a trigger discharge gap therebetween and extends in a direction away from each other along a longitudinal direction of the glass tube (1) at each side of the gap (5), and the gas discharge UV light-emitting device further comprises an insulating layer (2) disposed between the electrodes (3, 4) and the outer wall surface of the bottom part (1b) of the glass tube (1), the electrodes and the outer surface of the bottom part of each glass tube being on the insulating layer.

2. The gas discharge UV light-emitting device according to claim 1, wherein: the insulating layer (2) is composed of a resin film; and each electrode (3, 4) has a length three times or more of the gap (5) along the longitudinal direction of the glass tube (1).

3. The gas discharge UV light-emitting device according to claim 1 or 2, wherein: the glass tube (1) is composed of a borosilicate glass having a thickness of 300 µm or less; and an ultraviolet light-emitting phosphor layer (6) is provided on an inner surface of the bottom part (1b) of the glass tube (1).

4. The gas discharge UV light-emitting device according to any one of claims 1 to 3, wherein the insulating layer (2) is composed of a heat-resistant resin film, and said pair of electrodes (3, 4) is arranged on a lower surface of the heat resistant resin film.

5. The gas discharge UV light-emitting device according to any one of claims 1 to 4, further comprising a UV translucent resin coating formed on the outer surface of the glass tube (1).

6. The gas discharge UV light-emitting device according to any one of claims 1 to 5, wherein:
the glass tube (1), as a main component, has a flat-oval cross-section;
the glass tube has an upper flat surface having a thickness of 100 µm or less and a bottom flat surface facing each other on the cross section thereof;
the pair of electrodes (3, 4) are discharge electrodes facing the bottom flat surface of the glass tube (1) and have a pattern being away from each other in the longitudinal direction of the glass tube (1);
the insulating layer (2) is wider than a width of the flat-oval cross-section of the glass tube (1) and is disposed between the discharge electrodes (3, 4) and an outer surface of the bottom flat surface of the glass tube (1); and
said upper flat surface is defined as the light-emitting surface.

7. The gas discharge UV light-emitting device according to any one of claims 1, 4 or 5, wherein:
the glass tube (1) has a flat-oval transverse section;
the glass tube has an upper flat surface and a bottom flat surface facing each other across a major axis;
the upper part flat surface is defined as the light-emitting surface and the bottom part flat surface is provided with an ultraviolet light-emitting phosphor layer (6) on an inner surface thereof;
the pair of electrodes (3, 4) are discharge electrodes and disposed on the bottom flat surface of the glass tube (1) so as to extend in the direction away from each other along the longitudinal direction of the glass tube (1) at each side of the gap (5), each discharge electrode (3, 4) having a length at least three times of the gap (5);
the insulating layer (2) has a width larger than the major axis of the glass tube (1); and
the insulating layer (2) is disposed between the discharge electrodes (3, 4) and the outer wall surface of the bottom flat surface of the glass tube (1).

8. A UV light source unit (100) comprising:
an array of gas discharge UV light-emitting devices according to any of claims 1, 4 or 5, the tube (10) of each device arranged parallel to one another, each bottom part (1b) configured to act as a non-emitting surface;
an ultraviolet light-emitting phosphor layer (6) formed on an inner surface of the bottom part (1b) of each glass tube (1);
a pair of discharge electrodes (30, 40) commonly disposed and aligned on a back side of the tube array corresponding to the bottom parts (1b) of the plurality of gas discharge light-emitting tubes (10), the pair of discharge electrodes (30, 40) comprising each pair of electrodes (3, 4),
wherein: the pair of discharge electrodes (30, 40) extends in a direction away from each other along a longitudinal direction of the gas discharge light-emitting tubes (10) at each side of each gap (5); and each of the discharge electrodes (30, 40) has a length three times or more of each gap (5); the insulating layer (2), disposed between the electrodes (3, 4) and the outer wall surface of the bottom part (1 b) of each glass tube (1), forms a common insulating support member (20).

9. A gas discharge UV light-emitting module comprising the UV light source unit (100) according to claim 8, a drive circuit (200) and a common case (27);
wherein the gas discharge UV light-emitting device and the drive circuit (200) are mounted in the common case (27);
wherein said drive circuit unit (200) comprising: an inverter circuit (INV) configured to use a battery (BT) as a power supply; and a step-up circuit (TF), said drive circuit unit (200) being operatively connected to the UV light source unit (100); and
wherein said drive circuit unit (200) is integrally mounted to the UV light source unit (100).

10. The gas discharge UV light-emitting module according to claim 9, further comprising an ultraviolet transmitting protection film (28) on the emitting surface of the gas discharge light-emitting tubes (10).

11. A gas discharge UV light-emitting device which comprises:
the gas discharge UV light-emitting device according to any one of claims 1 to 7, and
a drive circuit comprising a step-up transformer (TF) having a second winding generating an alternating voltage across two output terminals thereof, one of the output terminals being connected to one of the pair of discharge electrodes (3) as a reference potential terminal, and the other output terminal being connected to the other electrode (4).

## Patentansprüche

1. UV-Licht-emittierende Gasentladungsvorrichtung, umfassend:
eine Glasröhre (1), die einen oberen Teil (1a) und einen Bodenteil (1b) aufweist, die einander in einem Querschnitt davon gegenüberliegen, und die mit einem Entladungsgas gefüllt ist, wobei der obere Teil (1a) als lichtemittierende Oberfläche definiert ist;
mindestens ein Paar Elektroden (3, 4), das an einer Position angeordnet ist, die einer Außenwandoberfläche des Bodenteils (1b) der Glasröhre (1) gegenüberliegt,
wobei das Paar Elektroden (3, 4) einen Spalt (5) aufweist, der einen Auslöserentladungsspalt dazwischen bildet, und sich in einer Richtung weg voneinander entlang einer Längsrichtung der Glasröhre (1) auf jeder Seite des Spalts (5) erstreckt, und die UV-Licht-emittierende Gasentladungsvorrichtung ferner eine Isolierschicht (2) umfasst, die zwischen den Elektroden (3, 4) und der Außenwandoberfläche des Bodenteils (1b) der Glasröhre(1) angeordnet ist, wobei sich die Elektroden und die Außenoberfläche des Bodenteils jeder Glasröhre auf der Isolierschicht befinden.

2. UV-Licht-emittierende Gasentladungsvorrichtung nach Anspruch 1, wobei: die Isolierschicht (2) aus einem Harzfilm besteht; und jede Elektrode (3, 4) entlang der Längsrichtung der Glasröhre (1) eine Länge aufweist, die das Dreifache des Spalts (5) oder mehr beträgt.

3. UV-Licht-emittierende Gasentladungsvorrichtung nach Anspruch 1 oder 2, wobei: die Glasröhre (1) aus einem Borosilikatglas mit einer Dicke von 300 µm oder weniger besteht; und eine ultraviolettes Licht emittierende Phosphorschicht (6) auf einer Innenoberfläche des Bodenteils (1b) der Glasröhre (1) bereitgestellt ist.

4. UV-Licht-emittierende Gasentladungsvorrichtung nach einem der Ansprüche 1 bis 3, wobei die Isolierschicht (2) aus einem hitzebeständigen Harzfilm besteht und das Paar Elektroden (3, 4) auf einer unteren Oberfläche des hitzebeständigen Harzfilms positioniert ist.

5. UV-Licht-emittierende Gasentladungsvorrichtung nach einem der Ansprüche 1 bis 4, ferner umfassend eine UV-durchlässige Harzbeschichtung, die auf der Außenoberfläche der Glasröhre (1) ausgebildet ist.

6. UV-Licht-emittierende Gasentladungsvorrichtung nach einem der Ansprüche 1 bis 5, wobei:
die Glasröhre (1) als einen Hauptbestandteil einen flachovalen Querschnitt aufweist;
die Glasröhre eine obere flache Oberfläche mit einer Dicke von 100 µm oder weniger und eine flache Bodenoberfläche aufweist, die im Querschnitt davon einander gegenüberliegen;
das Paar Elektroden (3, 4) Entladungselektroden sind, die der flachen Bodenoberfläche der Glasröhre (1) gegenüberliegen und ein Muster aufweisen, das in der Längsrichtung der Glasröhre (1) voneinander weg verläuft;
die Isolierschicht (2) breiter als eine Breite des flachovalen Querschnitts der Glasröhre (1) ist und zwischen den Entladungselektroden (3, 4) und einer Außenoberfläche der flachen Bodenoberfläche der Glasröhre (1) angeordnet ist; und
die obere flache Oberfläche als die lichtemittierende Oberfläche definiert ist.

7. UV-Licht-emittierende Gasentladungsvorrichtung nach einem der Ansprüche 1, 4 oder 5, wobei:
die Glasröhre (1) einen flachovalen Querschnitt aufweist;
die Glasröhre eine obere flache Oberfläche und eine flache Bodenoberfläche aufweist, die einander über eine Hauptachse hinweg gegenüberliegen;
die flache Oberfläche des oberen Teils als die lichtemittierende Oberfläche definiert ist und die flache Oberfläche des Bodenteils auf einer Innenoberfläche davon mit einer ultraviolettes Licht emittierenden Phosphorschicht (6) bereitgestellt ist;
das Paar Elektroden (3, 4) Entladungselektroden sind und so auf der flachen Bodenoberfläche der Glasröhre (1) angeordnet sind, dass sie sich entlang der Längsrichtung der Glasröhre (1) auf jeder Seite des Spalts (5) in der Richtung voneinander weg erstrecken, wobei jede Entladungselektrode (3, 4) eine Länge aufweist, die mindestens das Dreifache des Spalts (5) beträgt;
die Isolierschicht (2) eine Breite aufweist, die größer als die Hauptachse der Glasröhre (1) ist; und
die Isolierschicht (2) zwischen den Entladungselektroden (3, 4) und der Außenwandoberfläche der flachen Bodenoberfläche der Glasröhre (1) angeordnet ist.

8. UV-Lichtquelleneinheit (100), umfassend:
eine Anordnung aus UV-Licht-emittierenden Gasentladungsvorrichtungen nach einem der Ansprüche 1, 4 oder 5, wobei die Röhre (10) jeder Vorrichtung parallel zu jeder anderen positioniert ist, wobei jeder Bodenteil (1b) dazu konfiguriert ist, als eine nicht emittierende Oberfläche zu fungieren;
eine ultraviolettes Licht emittierende Phosphorschicht (6), die auf einer Innenoberfläche des Bodenteils (1b) jeder Glasröhre (1) ausgebildet ist;
ein Paar Entladungselektroden (30, 40), die gemeinsam auf einer Rückseite der Röhrenanordnung angeordnet und ausgerichtet sind, die den Bodenteilen (1b) der Vielzahl von lichtemittierenden Gasentladungsröhren (10) entspricht, wobei das Paar Entladungselektroden (30, 40) jedes Paar Elektroden (3, 4) umfasst,
wobei: das Paar Entladungselektroden (30, 40) sich in einer Richtung voneinander weg entlang einer Längsrichtung der lichtemittierenden Gasentladungsröhren (10) auf jeder Seite jedes Spalts (5) erstreckt; und jede der Entladungselektroden (30, 40) eine Länge aufweist, die das Dreifache oder mehr jedes Spalts (5) beträgt; die Isolierschicht (2), die zwischen den Elektroden (3, 4) und der Außenwandoberfläche des Bodenteils (1b) jeder Glasröhre (1) angeordnet ist, ein gemeinsames isolierendes Trägerelement (20) bildet.

9. UV-Licht-emittierendes Gasentladungsmodul, das die UV-Lichtquelleneinheit (100) nach Anspruch 8, eine Antriebsschaltung (200) und ein gemeinsames Gehäuse (27) umfasst;
wobei die UV-Licht-emittierende Gasentladungsvorrichtung und die Antriebsschaltung (200) in dem gemeinsamen Gehäuse (27) montiert sind;
wobei die Antriebsschaltungseinheit (200) Folgendes umfasst: eine Wechselrichterschaltung (INV), die dazu konfiguriert ist, eine Batterie (BT) als eine Stromversorgung zu verwenden; und eine Aufwärtsschaltung (TF), wobei die Antriebsschaltungseinheit (200) mit der UV-Lichtquelleneinheit (100) wirkverbunden ist; und
wobei die Antriebsschaltungseinheit (200) einstückig mit der UV-Lichtquelleneinheit (100) montiert ist.

10. UV-Licht-emittierendes Gasentladungsmodul nach Anspruch 9,
ferner einen ultraviolett durchlassenden Schutzfilm (28) auf der emittierenden Oberfläche der lichtemittierenden Gasentladungsröhren (10) umfassend.

11. UV-Licht-emittierende Gasentladungsvorrichtung, die Folgendes umfasst:
die UV-Licht-emittierende Gasentladungsvorrichtung nach einem der Ansprüche 1 bis 7, und
eine Antriebsschaltung, die einen Aufwärtstransformator (TF) mit einer zweiten Wicklung umfasst, die über zwei Ausgangsanschlüsse davon eine Wechselspannung erzeugt, wobei einer der Ausgangsanschlüsse mit einer von dem Paar Entladungselektroden (3) als ein Bezugspotentialanschluss verbunden ist und der andere Ausgangsanschluss mit der anderen Elektrode (4) verbunden ist.

## Revendications

1. Dispositif électroluminescent émetteur d'UV à décharge de gaz comprenant :
un tube de verre (1) comportant une partie supérieure (1a) et une partie inférieure (1b) se faisant face sur une section transversale de celui-ci, et rempli d'un gaz de décharge, la partie supérieure (1a) étant définie en tant que surface électroluminescente ;
au moins une paire d'électrodes (3, 4) disposées au niveau d'une position faisant face à une surface de paroi externe de la partie inférieure (1b) du tube de verre (1),
ladite paire d'électrodes (3, 4) comportant un espace (5) constituant un espace de décharge de déclenchement entre elles et s'étendant dans une direction en s'éloignant l'une de l'autre le long d'une direction longitudinale du tube de verre (1) de chaque côté de l'espace (5), et ledit dispositif électroluminescent émetteur d'UV à décharge de gaz comprenant en outre une couche isolante (2) disposée entre les électrodes (3, 4) et la surface de paroi externe de la partie inférieure (1b) du tube de verre (1), les électrodes et la surface externe de la partie inférieure de chaque tube de verre étant sur la couche isolante.

2. Dispositif électroluminescent émetteur d'UV à décharge de gaz selon la revendication 1, ladite couche isolante (2) étant composée d'un film de résine ; et chaque électrode (3, 4) comportant une longueur trois fois, ou plus, supérieure à celle de l'espace (5) le long de la direction longitudinale du tube de verre (1).

3. Dispositif électroluminescent émetteur d'UV à décharge de gaz selon la revendication 1 ou 2, ledit tube de verre (1) étant composé d'un verre borosilicaté comportant une épaisseur inférieure ou égale à 300 µm ; et une couche de phosphore électroluminescente émettrice d'ultraviolet (6) étant prévue sur une surface interne de la partie inférieure (1b)
du tube de verre (1).

4. Dispositif électroluminescent émetteur d'UV à décharge de gaz selon l'une quelconque des revendications 1 à 3, ladite couche isolante (2) étant composée d'un film de résine résistant à la chaleur, et ladite paire d'électrodes (3, 4) étant agencée sur une surface inférieure du film de résine résistant à la chaleur.

5. Dispositif électroluminescent émetteur d'UV à décharge de gaz selon l'une quelconque des revendications 1 à 4, comprenant en outre un revêtement de résine translucide aux UV formé sur la surface externe du tube de verre (1).

6. Dispositif électroluminescent émetteur d'UV à décharge de gaz selon l'une quelconque des revendications 1 à 5,
ledit tube de verre (1), en tant que composant principal, comportant une section transversale plate-ovale ;
ledit tube de verre comportant une surface plane supérieure comportant une épaisseur inférieure ou égale à 100 µm et une surface plane inférieure se faisant face sur sa section transversale ;
ladite paire d'électrodes (3, 4) étant des électrodes de décharge faisant face à la surface plane inférieure du tube de verre (1) et comportant un motif éloignées l'une de l'autre dans la direction longitudinale du tube de verre (1) ;
ladite couche isolante (2) étant plus large qu'une largeur de la section transversale plane-ovale du tube de verre (1) et étant disposée entre les électrodes de décharge (3, 4) et une surface externe de la surface plane inférieure du tube de verre (1) ; et
ladite surface plane supérieure étant définie comme la surface électroluminescente.

7. Dispositif électroluminescent émetteur d'UV à décharge de gaz selon l'une quelconque des revendications 1, 4 ou 5,
ledit tube de verre (1) comportant une section transversale plane-ovale ;
ledit tube de verre comportant une surface plane supérieure et une surface plane inférieure se faisant face sur un axe majeur ;
ladite surface plane de partie supérieure étant définie comme la surface électroluminescente et ladite surface plane de partie inférieure étant dotée d'une couche de phosphore électroluminescente émettrice d'ultraviolet (6) sur une surface interne de celle-ci ;
ladite paire d'électrodes (3, 4) étant des électrodes de décharge et étant disposées sur la surface plane inférieure du tube de verre (1) de façon à s'étendre dans la direction en s'éloignant l'une de l'autre le long de la direction longitudinale du tube de verre (1) de chaque côté de l'espace (5), chaque électrode de décharge (3, 4) comportant une longueur supérieure ou égale à trois fois celle de l'espace (5) ;
ladite couche isolante (2) comportant une largeur supérieure à l'axe majeur du tube de verre (1) ; et
ladite couche isolante (2) étant disposée entre les électrodes de décharge (3, 4) et la surface de paroi externe de la surface plane inférieure du tube de verre (1).

8. Unité de source de lumière UV (100) comprenant :
un réseau de dispositifs électroluminescents émetteurs d'UV à décharge de gaz selon l'une quelconque des revendications 1, 4 ou 5, ledit tube (10) de chaque dispositif étant agencé parallèlement aux autres, chaque partie inférieure (1b) étant configurée pour agir comme une surface non émettrice ;
une couche de phosphore électroluminescente émettrice d'ultraviolet (6) formée sur une surface interne de la partie inférieure (1b) de chaque tube de verre (1) ;
une paire d'électrodes de décharge (30, 40) disposées et alignées de manière commune sur un côté arrière du réseau de tubes correspondant aux parties inférieures (1b) de la pluralité de tubes électroluminescents à décharge de gaz (10), la paire d'électrodes de décharge (30, 40) comprenant chaque paire d'électrodes (3, 4), ladite paire d'électrodes de décharge (30, 40) s'étendant dans une direction s'éloignant l'une de l'autre le long d'une direction longitudinale des tubes électroluminescents à décharge de gaz (10) de chaque côté de chaque espace (5) ; et chacune des électrodes de décharge (30, 40) comportant une longueur trois fois, ou plus, supérieure à celle de l'espace (5) ; ladite couche isolante (2), disposée entre les électrodes (3, 4) et ladite surface de paroi externe de la partie inférieure (1b) de chaque tube de verre (1), formant un élément de support isolant commun (20).

9. Module électroluminescent émetteur d'UV à décharge de gaz comprenant l'unité de source de lumière UV (100) selon la revendication 8, un circuit d'attaque (200) et un boîtier commun (27) ; ledit dispositif électroluminescent émetteur d'UV à décharge de gaz et ledit circuit d'attaque (200) étant montés dans le boîtier commun (27) ;
ladite unité de circuit d'attaque
(200) comprenant : un circuit onduleur (INV) configuré pour utiliser une batterie (BT) en tant qu'alimentation électrique ; et un circuit élévateur (TF), ladite unité de circuit d'attaque (200) étant connectée fonctionnellement à l'unité de source de lumière UV (100) ; et
ladite unité de circuit d'attaque (200) étant montée de manière intégrée
à l'unité de source de lumière UV (100).

10. Module électroluminescent émetteur d'UV à décharge de gaz selon la revendication 9, comprenant en outre un film de protection transmettant les ultraviolets (28) sur la surface émettrice des tubes électroluminescents à décharge de gaz (10).

11. Dispositif électroluminescent émetteur d'UV à décharge de gaz qui comprend :
le dispositif électroluminescent émetteur d'UV à décharge de gaz selon l'une quelconque des revendications 1 à 7, et
un circuit d'attaque comprenant un transformateur élévateur (TF) comportant un second enroulement générant une tension alternative aux deux bornes de sortie de celui-ci, l'une des bornes de sortie étant connectée à l'une des paires d'électrodes de décharge (3) en tant que borne de potentiel de référence, et l'autre borne de sortie étant connectée à l'autre électrode (4).
